# EUROPEAN PATENT APPLICATION

(11) **EP 4 492 218 A1**
(43) Date of publication of application: **15.01.2025**
(21) Application number: 24159558.6
(22) Date of filing: 26.02.2024
(51) Int. Cl.: G06F 3/12

(54) **INFORMATION PROCESSING SYSTEM, EXECUTION SYSTEM, INFORMATION PROCESSING PROGRAM AND INFORMATION PROCESSING METHOD**

(30) Priority: 14.07.2023 JP 2023116146
(71) Applicant: FUJIFILM Business Innovation Corp., Minato-ku Tokyo (JP)
(72) Inventor: MATSUI, Takao, Kanagawa (JP)
(74) Representative: Haseltine Lake Kempner LLP

(57) **Abstract**

An information processing system includes a processor configured to: when a planned destination of an execution instruction that execution contents to be performed by a first execution device are set in is changed from the first execution device to a second execution device before the execution instruction is provided to the first execution device, delete setting contents set as the execution contents from the execution instruction; and perform control on a presenter to cause the presenter to present the deleted setting contents to a user.

## Description

### Background

### (i) Technical Field

The present disclosure relates to an information processing system, an execution system, an information processing program and an information processing method.

### (ii) Related Art

Japanese Unexamined Patent Application Publication No. 2017-049986 discloses a print control program that causes a computer to operate as a customizing unit, switching unit, determination unit and alternate setting processor. The customizing unit customizes, to a value of a customized setting, setting data used to perform print control on a printer and stores the customized setting value on a memory. The switching unit switches setting data to be used in printing, out of setting data for multiple printers stored on the memory, to setting data for a printer designated as a switch destination. The determination unit determines whether the customized setting that is to be invalidated on a type of the printer after the switching is present or not. The alternate setting processor changes the customized setting to be invalided to an alternate setting.

An information processing system contemplated herein includes a processor that is configured to: when a planned destination of an execution instruction that execution contents to be performed by a first execution device are set in is changed from the first execution device to a second execution device before the execution instruction is provided to the first execution device, perform only an operation to delete setting contents set as the execution contents from the execution instruction.

Since such information processing system performs only the operation to delete the setting contents from the execution instruction, a user may be unable to recognize the setting contents deleted from the execution instruction.

### Summary

Accordingly, it is an object of the present disclosure to allow a user to recognize setting contents deleted from an execution instruction.

According to a first aspect of the present disclosure, there is provided an information processing system including a processor configured to: when a planned destination of an execution instruction that execution contents to be performed by a first execution device are set in is changed from the first execution device to a second execution device before the execution instruction is provided to the first execution device, delete setting contents set as the execution contents from the execution instruction; and perform control on a presenter to cause the presenter to present the deleted setting contents to a user.

According to a second aspect of the disclosure in view of the first aspect, the processor is configured to: when the changing is performed, delete the setting contents from the execution instruction; and perform control on the presenter to cause the presenter to present, to the user, the deleted setting contents and information indicating that the setting contents have been deleted from the execution instruction.

According to a third aspect of the present disclosure in view of one of the first and second aspects, the processor is configured to: when the changing is performed, delete the setting contents from the execution instruction; and perform control on the presenter to cause the presenter to present, to the user, the deleted setting contents and a setting screen causing the user to set execution contents to be performed by the second execution device.

According to a fourth aspect of the present disclosure in view of one of the first through third aspects, the processor is configured to: when the changing is performed, store a subset of the setting contents on execution contents common in an execution form to the first execution device and the second execution device and delete the setting contents excluding the subset; and perform control on the presenter to cause the presenter to present the deleted setting contents to the user.

According to a fifth aspect of the present disclosure in view of the fourth aspect, the processor is configured to: when the changing is performed, store a subset of the setting contents on execution contents common in an execution form to the first execution device and the second execution device and delete the setting contents excluding the subset; and perform control on the presenter to cause the presenter to present the deleted setting contents to the user but not to present the stored subset to the user.

According to a sixth aspect of the present disclosure in view of one of the first through fifth aspects, the processor is configured to: when the planned destination of a print instruction serving as the execution instruction that the execution contents to be performed by a first printer serving as the first execution device are set in is changed from the first printer to a second printer serving as the second execution device before the print instruction is provided to the first printer, delete the setting contents set as the execution contents from the print instruction; and perform control on the presenter to cause the presenter to present the deleted setting contents to the user.

According to a seventh aspect of the present disclosure, there is provided an execution system including: a first execution device; a second execution device; and the information processing system according to one of the first through sixth aspects.

According to an eighth aspect of the present disclosure, there is provided an information processing program causing a computer to execute a process for processing information, the process comprising: when a planned destination of an execution instruction that execution contents to be performed by a first execution device are set in is changed from the first execution device to a second execution device before the execution instruction is provided to the first execution device, deleting setting contents set as the execution contents from the execution instruction; and performing control on a presenter to cause the presenter to present the deleted setting contents to a user.

According to an ninth aspect of the present disclosure, there is provided an information processing method including: when a planned destination of an execution instruction that execution contents to be performed by a first execution device are set in is changed from the first execution device to a second execution device before the execution instruction is provided to the first execution device, deleting setting contents set as the execution contents from the execution instruction; and performing control on a presenter to cause the presenter to present the deleted setting contents to a user.

According to the configuration of the first aspect, the user may recognize the setting contents deleted from the execution instruction.

According to the configuration of the second aspect, the user may recognize that the setting contents have been deleted from the execution instruction.

According to the configuration of the third aspect, the user may set the execution contents to be performed by the second execution device while recognizing the setting contents deleted from the execution instruction.

According to the configuration of the fourth aspect, the user may save time in setting the execution contents to be performed by the second execution device in comparison with the case where all the setting contents are deleted from the execution instruction.

According to the configuration of the fifth aspect, the user may recognize easily what setting contents are deleted in comparison with the case where the processor performs control on the presenter such that both the deleted setting contents and continuously stored setting contents are presented to the user.

According to the configuration of the sixth aspect, the user may recognize the setting contents deleted from the print instruction.

According to the configuration of the seventh aspect, the user may recognize the setting contents deleted from the execution instruction.

According to the configuration of the eighth aspect, the user may recognize the setting contents deleted from the execution instruction.

According to the configuration of the ninth aspect, the user may recognize the setting contents deleted from the execution instruction.

### Brief Description of the Drawings

Exemplary embodiment of the present disclosure will be described in detail based on the following figures, wherein:
Fig. 1 is a block diagram illustrating an example of an execution system of an exemplary embodiment;
Fig. 2 illustrates a setting screen of the exemplary embodiment when a planned destination of a print instruction is a first execution device;
Fig. 3 illustrates the setting screen of the exemplary embodiment when the planned destination of the print instruction is changed to a second execution device;
Fig. 4 is a block diagram illustrating a functional configuration example of a management apparatus of the exemplary embodiment; and
Fig. 5 is a flowchart illustrating a flow of a display process performed by the execution system of the exemplary embodiment.

### Detailed Description

Exemplary embodiment of the disclosure is described with reference to the drawings. Execution System 1

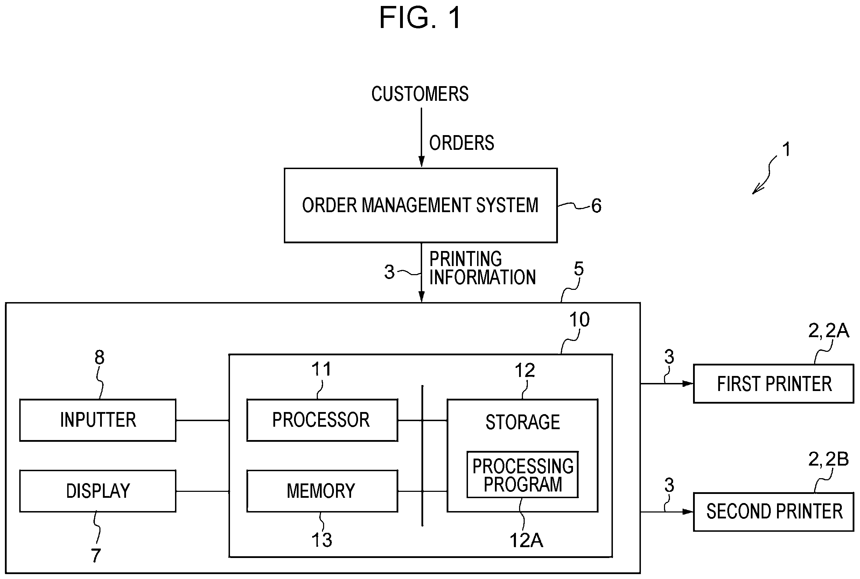

An execution system 1 of the exemplary embodiment is described below. Fig. 1 is a block diagram illustrating an example of the execution system 1 of the exemplary embodiment.

The execution system 1 performs a printing operation. According to the exemplary embodiment, the execution system 1 receives a printing operation order and provides a print instruction to a printer 2 in accordance with order contents and the printer 2 performs the printing operation. Printed materials output by the execution system 1 may be books, booklets and/or flyers. Since the printing operation also forms an image, the printing operation also refers to as an image forming operation.

Specifically as illustrated in Fig. 1, the execution system 1 includes multiple printers 2, order management system 6 and print management system 5. The elements of the execution system 1 are connected to each other via a communication network 3. The communication network 3 includes at least one of wired and radio networks. Example of the radio network may be the Internet and intranet. The elements of the execution system 1 are described below. Order Management System 6

The order management system 6 manages information (hereinafter referred to as print information) related to a printing operation ordered by a customer. When the printing operation is ordered by the customer, the order management system 6 transmits the print information to the print management system 5 via the communication network 3.

The print information includes information related to a printer performing the printing operation, image serving a print target and print contents (such as the number of copies, color mode, setting for stapling or not and position to be stapled).

### Multiple Printers 2

The printers 2 are examples of execution devices and perform printing on recording media in response to an print instruction from the print management system 5. The printers 2 includes, at least, a first printer 2A and second printer 2B.

The execution device is not limited to the printer and may be any apparatus that performs a predetermined operation, for example, may be a processing apparatus that processes a printed recording medium or a manufacturing apparatus that produces industrial products. For example, the processing apparatus may be a cutting machine cutting the recording medium or a bookbinding machine.

### Print Management System 5

The print management system 5 is an example of an information processing apparatus and manages the printing operation. The print management system 5 includes a display 7, inputter 8 and management apparatus 10. The management apparatus 10 in the print management system 5 provides the print instruction to one of the printers 2 in response to the print information acquired from the order management system 6.

### Display 7

The display 7, serving as an example of a presenter, displays presentation information to a user (specifically, an administrator). For example, the display 7 includes a liquid-crystal display. The display 7 is not limited to the liquid-crystal display and may be any device that presents the presentation information to the user, for example, an organic electroluminescence (EL) display.

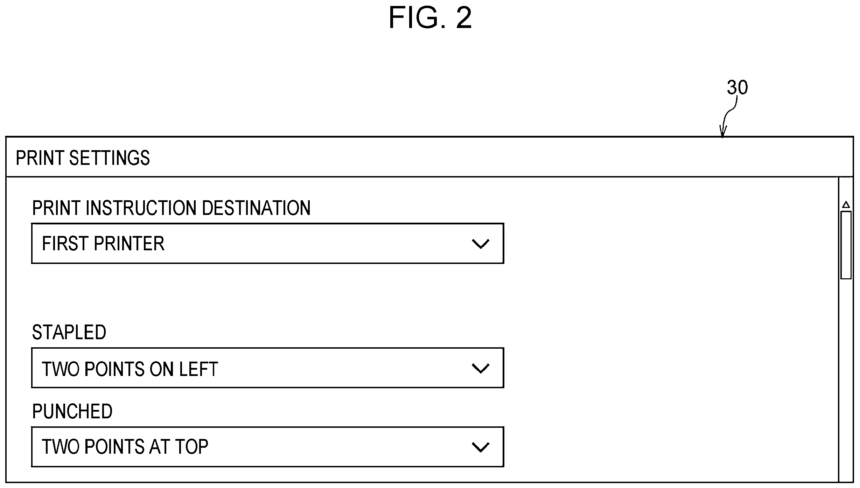

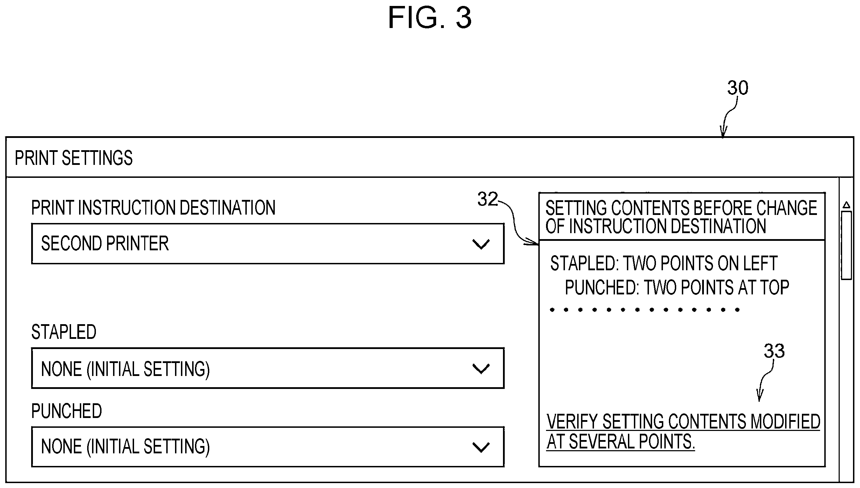

The display 7 is able to display a variety of display screens. The display screens displayed on the display 7 include setting screens 30 (see Figs. 2 and 3) on which a user may perform settings on printing.

The display 7 may be external to the print management system 5. The presenter may present information to the user and, for example, may be a loudspeaker that presents information to the user via sound.

### Inputter 8

The inputter 8 receives an instruction from the user. For example, the inputter 8 may include a pointing device, such as a mouse, and input keys, such as a keyboard.

According to the exemplary embodiment, the user is able to perform an input operation on the inputter 8, for example, select or change a planned destination of a print instruction ("print instruction destination" in Figs. 2 and 3) on a setting screen 30 (see Figs. 2 and 3) displayed on the display 7 and select or change execution contents to be performed by the printer 2.

Fig. 2 illustrates the state in which the first printer 2A is selected as a planned destination of the print instruction and Fig. 3 illustrates the state in which the planned destination of the print instruction is changed from the first printer 2A to the second printer 2B. According to the exemplary embodiment, the selection or change of the planned destination of the print instruction and the selection or change of the execution contents to be performed by the printer 2 are typically performed on the same screen but alternatively may be performed on different screens.

The display 7 may be external to the print management system 5. The inputter 8 is not limited to the pointing device and the input keys. The inputter 8 may be a device able to receive an instruction from user, for example, a touch panel.

### Management Apparatus 10

The management apparatus 10 works as a computer and includes a processor 11, storage 12 and memory 13 as illustrated in Fig. 1.

The processor 11 is, for example, a central processing unit (CPU) serving as a generalpurpose processor. The term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment, the term "processor" is broad enough to encompass one processor or plural processors in collaboration which are located physically apart from each other but may work cooperatively. The order of operations of the processor is not limited to one described in the embodiments, and may be changed.

The storage 12 stores a variety of data and a variety of programs including a processing program 12A. Specifically, the storage 12 includes a recording medium, such as a hard disk drive (HDD), solid-state drive (SSD) or flash memory. The storage 12 is not limited to a single medium and may be plural media which are located physically apart from each other. The processing program 12A is an example of an information processing program.

The memory 13 serves as a working area that is used by the CPU 11 to execute the variety of programs and the memory 13 temporarily stores the variety of program and the variety of data when the CPU 11 performs processes. The CPU 11 reads the processing program 12A from the storage 12 and executes the processing program 12A using the memory 13 as the working area.

The processor 11 in the management apparatus 10 performs a variety of functions for a predetermined process by executing the information processing program. A functional configuration described below is implemented when the processor 11 serving as a hardware resource and the processing program serving as a software resource cooperate with each other.

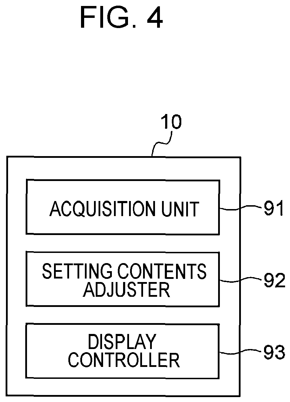

Fig. 4 is a block diagram illustrating a functional configuration example of the management apparatus 10 of the exemplary embodiment. As illustrated in Fig. 4, for example, the management apparatus 10 includes an acquisition unit 91, setting contents adjuster 92 and display controller 93.

The acquisition unit 91 acquires print information transmitted from the order management system 6 and input information entered via the inputter 8. The input information entered via the inputter 8 may include information input on the setting screen 30 (see Figs. 2 and 3).

Specifically, the input information entered by the user on the setting screen 30 (see Figs. 2 and 3) via the inputter 8 is about the selection or change of the planned destination of the print instruction ("print instruction destination" in Figs. 2 and 3) and the selection or change of the execution contents to be performed by the printer 2. As illustrated in Figs. 2 and 3, the execution contents include stapled location, punched location and other execution points.

In accordance with the input information entered via the inputter 8, the setting contents adjuster 92 adjusts setting contents set as the execution contents to be performed by the printer 2. Specifically, when the planned destination of the print instruction is changed from the first printer 2A (see Fig. 2) to the second printer 2B (see Fig. 3) (this operation is hereinafter referred to as planned destination change) before the first printer 2A is provided with the print instruction that has the execution contents set therewithin and is to be performed by the first printer 2A, the setting contents adjuster 92 deletes from an execution instruction the setting contents set as the execution contents.

According to the exemplary embodiment, when the planned destination is changed, the setting contents adjuster 92 performs an initial setting by continuously storing, out of the setting contents, setting contents on a subset of execution contents that is common in an execution form to the first printer 2A and second printer 2B and by deleting setting contents of the execution contents excluding the subset (see Fig. 3).

The continuously stored setting contents include, for example, the title of the print information (also referred to as a job name), number of copies, mode of printing (setting for simplex printing or duplex printing) and discharge method of printed materials (setting for surface discharging or backside discharging).

The deleted setting contents include a discharge destination of the printed materials, setting for stapling, setting for punching, setting for paper folding, type and size of recording media, color mode (setting for color printing or monochrome printing), color profile (color tone), user adjustment curve (color strength), and location and magnification in printing.

The display controller 93 controls the displaying operation of the display 7. When the planned destination is changed, the display controller 93 performs control on the display 7 causing the display 7 to present, to the user, setting contents 32 deleted by the setting contents adjuster 92 (see Fig. 3).

Specifically, when the planned destination is changed, the display controller 93 performs control on the display 7, causing the display 7 to present to the user the setting contents 32 deleted by the setting contents adjuster 92 but not to present to the user the setting contents continuously stored by the setting contents adjuster 92.

When the planned destination is changed in the exemplary embodiment, the display controller 93 performs control on the display 7, causing the display 7 to display to the user the setting contents 32 deleted by the setting contents adjuster 92 and deletion information 33 indicating that the setting contents deleted by the setting contents adjuster 92 have been deleted from the execution instruction.

Referring to Fig. 3, the deletion information 33 may be a message reading "Verify setting contents modified at several points."

According to the exemplary embodiment, the display 7 is controlled such that the setting screen 30 causing the user to set the execution contents to be performed by the second printer 2B and the setting contents are presented to the user.

### Presentation Process of Execution System 1

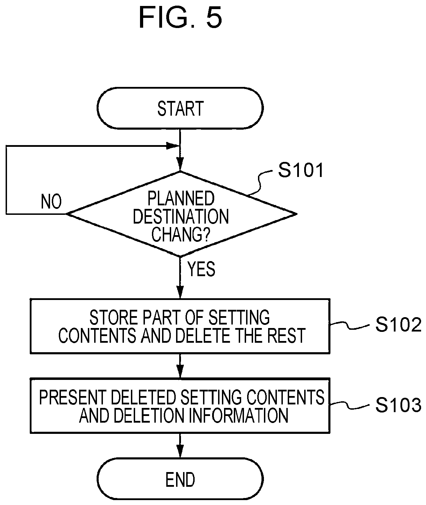

Presentation process to be performed by the execution system 1 is described below. Fig. 5 is a flowchart illustrating a flow of the presentation process of the exemplary embodiment.

The presentation process is performed when the processor 11 reads the processing program 12A from the storage 12 and then performs the read processing program 12A. For example, the presentation process starts when the management apparatus 10 acquires the print information from the order management system 6.

Referring to Fig. 5, before providing to the first printer 2A the print instruction that the execution contents to be performed by the first printer 2A are set in, the processor 11 determines whether the planned destination change has been performed to change the planned destination of the print instruction from the first printer 2A to the second printer 2B (step S101).

If it is determined that the planned destination change has not been performed (no in step S101), the processor 11 repeats the operation in step S101 until the planned destination change has been performed. If it is determined that the planned destination change has been performed (yes in step S101), the processor 11 performs the initial setting (step S102) by continuously storing, out of the setting contents, setting contents on a subset of execution contents that is common in the execution form to the first printer 2A and second printer 2B and by deleting the setting contents on the execution contents excluding the subset (step S102).

The processor 11 performs control on the display 7 such that the deleted setting contents 32 (see Fig. 3) and the deletion information 33 (see Fig. 3) indicating the deletion of the setting contents from the execution instruction are presented to the user and the setting contents continuously stored are not presented to the user (step S103) and then the processor 11 ends the process.

When the print instruction of the print information acquired by the management apparatus 10 is performed, the processor 11 ends the process even in the middle of the operation in step S 101.

### Operation of Exemplary Embodiment

According to the exemplary embodiment, when the planned destination is changed, the processor 11 deletes the setting contents set as the execution contents from the print instruction and performs control on the display 7 to cause the display 7 to present the deleted setting contents to the user. In this way, the user may recognize the setting contents deleted in response to the print instruction.

According to the exemplary embodiment, when the planned destination is changed, the processor 11 performs control on the display 7 to cause the display 7 to present the deleted setting contents 32 and the deletion information 33 indicating that the setting contents have been deleted from the print instruction. In this way, the user may recognize the deletion of the setting contents from the print instruction.

According to the exemplary embodiment, when the planned destination is changed, the processor 11 performs control on the display 7 to cause the display 7 to present to the user the setting contents and the setting screen 30 allowing the user to set the execution contents to be performed by the second printer 2B. In this way, the user may recognize the setting contents deleted from the print instruction while setting the execution contents to be performed by the second printer 2B.

According to the exemplary embodiment, when the planned destination is changed, the processor 11 continuously stores the setting contents on the subset of the execution contents common in an execution form to the first printer 2A and second printer 2B and deletes the setting contents on the execution contents excluding the subset.

Time for the user to set the execution contents to be performed by the second printer 2B may thus be reduced in comparison with the case where all the setting contents are deleted from the print instruction.

### Modifications

According to the exemplary embodiment, when the planned destination is changed, the processor 11 performs control on the display 7 to cause the display 7 to the user the deleted setting contents 32 and the deletion information 33 indicating that the setting contents have been deleted from the print instruction. The disclosure is not limited to this method. The processor 11 may perform control on the display 7 to cause the display 7 to present only the deleted setting contents to the user.

According to the exemplary embodiment, when the planned destination is changed, the processor 11 performs control on the display 7 to cause the display 7 to present to the user the setting contents together with the setting screen 30. The disclosure is not limited to this method. The processor 11 may perform control on the display 7 to cause the display 7 to present to the user the setting contents separately from the setting screen 30.

According to the exemplary embodiment, when the planned destination is changed, the processor 11 continuously stores, out of the setting contents, setting contents on the subset of the execution contents common in an execution form to the first printer 2A and second printer 2B and deletes the setting contents on the execution contents excluding the subset. The disclosure is not limited to this method. When the planned destination is changed, all the setting contents may be deleted from the execution instruction.

The disclosure is not limited to the exemplary embodiment described above and may cover alternatives, modifications and equivalents thereof without departing from the scope of the exemplary embodiment. For example, the modifications described above may be appropriately combined.

According to the exemplary embodiment, the information processing system includes the single apparatus but alternatively, may include multiple apparatuses. In other words, the term "system" in the exemplary embodiment may include a single apparatus or multiple apparatuses.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   when a planned destination of an execution instruction that execution contents to be performed by a first execution device are set in is changed from the first execution device to a second execution device before the execution instruction is provided to the first execution device,
   delete setting contents set as the execution contents from the execution instruction; and
   perform control on a presenter to cause the presenter to present the deleted setting contents to a user.
(((2))) In the information processing system according to (((1))), the processor is configured to:
   when the changing is performed, delete the setting contents from the execution instruction; and
   perform control on the presenter to cause the presenter to present, to the user, the deleted setting contents and information indicating that the setting contents have been deleted from the execution instruction.
(((3))) In the information processing system according to one of (((1))) and (((2))), the processor is configured to:
   when the changing is performed, delete the setting contents from the execution instruction; and
   perform control on the presenter to cause the presenter to present, to the user, the deleted setting contents and a setting screen causing the user to set execution contents to be performed by the second execution device.
(((4))) In the information processing system according to one of (((1))) through (((3))), the processor is configured to:
   when the changing is performed, store a subset of the setting contents on execution contents common in an execution form to the first execution device and the second execution device and delete the setting contents excluding the subset; and
   perform control on the presenter to cause the presenter to present the deleted setting contents to the user.
(((5))) In the information processing system according to (((4))), the processor is configured to:
   when the changing is performed, store a subset of the setting contents on execution contents common in an execution form to the first execution device and the second execution device and delete the setting contents excluding the subset; and
   perform control on the presenter to cause the presenter to present the deleted setting contents to the user but not to present the stored subset to the user.
(((6))) In the information processing system according to one of (((1))) through (((5))), the processor is configured to:
   when the planned destination of a print instruction serving as the execution instruction that the execution contents to be performed by a first printer serving as the first execution device are set in is changed from the first printer to a second printer serving as the second execution device before the print instruction is provided to the first printer,
   delete the setting contents set as the execution contents from the print instruction; and
   perform control on the presenter to cause the presenter to present the deleted setting contents to the user.
(((7))) An execution system including:
   a first execution device;
   a second execution device; and
   the information processing system according to one of (((1))) through (((6))).
(((8))) An information processing program causing a computer to execute a process for processing information, the process including:
   when a planned destination of an execution instruction that execution contents to be performed by a first execution device are set in is changed from the first execution device to a second execution device before the execution instruction is provided to the first execution device,
   deleting setting contents set as the execution contents from the execution instruction; and
   performing control on a presenter to cause the presenter to present the deleted setting contents to a user.

According to the configuration (((1))), the user may recognize the setting contents deleted from the execution instruction.

According to the configuration (((2))), the user may recognize that the setting contents have been deleted from the execution instruction.

According to the configuration (((3))), the user may set the execution contents to be performed by the second execution device while recognizing the setting contents deleted from the execution instruction.

According to the configuration(((4))), the user may save time in setting the execution contents to be performed by the second execution device in comparison with the case where all the setting contents are deleted from the execution instruction.

According to the configuration (((5))), the user may recognize easily what setting contents are deleted in comparison with the case where the processor performs control on the presenter such that both the deleted setting contents and continuously stored setting contents are presented to the user.

According to the configuration (((6))), the user may recognize the setting contents deleted from the print instruction.

According to the configuration (((7))), the user may recognize the setting contents deleted from the execution instruction.

According to the configuration (((8))), the user may recognize the setting contents deleted from the execution instruction.

## Claims

1. An information processing system comprising:
a processor configured to:
when a planned destination of an execution instruction that execution contents to be performed by a first execution device are set in is changed from the first execution device to a second execution device before the execution instruction is provided to the first execution device,
delete setting contents set as the execution contents from the execution instruction; and
perform control on a presenter to cause the presenter to present the deleted setting contents to a user.

2. The information processing system according to claim 1, where the processor is configured to:
when the changing is performed, delete the setting contents from the execution instruction; and
perform control on the presenter to cause the presenter to present, to the user, the deleted setting contents and information indicating that the setting contents have been deleted from the execution instruction.

3. The information processing system according to one of claims 1 and 2, where the processor is configured to:
when the changing is performed, delete the setting contents from the execution instruction; and
perform control on the presenter to cause the presenter to present, to the user, the deleted setting contents and a setting screen causing the user to set execution contents to be performed by the second execution device.

4. The information processing system according to one of claims 1 through 3, where the processor is configured to:
when the changing is performed, store a subset of the setting contents on execution contents common in an execution form to the first execution device and the second execution device and delete the setting contents excluding the subset; and
perform control on the presenter to cause the presenter to present the deleted setting contents to the user.

5. The information processing system according to claim 4, where the processor is configured to:
when the changing is performed, store a subset of the setting contents on execution contents common in an execution form to the first execution device and the second execution device and delete the setting contents excluding the subset; and
perform control on the presenter to cause the presenter to present the deleted setting contents to the user but not to present the stored subset to the user.

6. The information processing system according to one of claims 1 through 5, where the processor is configured to:
when the planned destination of a print instruction serving as the execution instruction that the execution contents to be performed by a first printer serving as the first execution device are set in is changed from the first printer to a second printer serving as the second execution device before the print instruction is provided to the first printer,
delete the setting contents set as the execution contents from the print instruction; and
perform control on the presenter to cause the presenter to present the deleted setting contents to the user.

7. An execution system comprising:
a first execution device;
a second execution device; and
the information processing system according to one of claims 1 through 6.

8. An information processing program causing a computer to execute a process for processing information, the process comprising:
when a planned destination of an execution instruction that execution contents to be performed by a first execution device are set in is changed from the first execution device to a second execution device before the execution instruction is provided to the first execution device,
deleting setting contents set as the execution contents from the execution instruction; and
performing control on a presenter to cause the presenter to present the deleted setting contents to a user.

9. An information processing method comprising:
when a planned destination of an execution instruction that execution contents to be performed by a first execution device are set in is changed from the first execution device to a second execution device before the execution instruction is provided to the first execution device,
deleting setting contents set as the execution contents from the execution instruction; and
performing control on a presenter to cause the presenter to present the deleted setting contents to a user.
